# EUROPEAN PATENT APPLICATION

(11) **EP 3 647 294 A1**
(43) Date of publication of application: **06.05.2020**
(21) Application number: 19206501.9
(22) Date of filing: 31.10.2019
(51) Int. Cl.: C04B 28/02, C04B 28/04

(54) **METHOD FOR BUILIDING WATER-REPELLENT MASONRY**

(30) Priority: 31.10.2018 BE 201805761
(71) Applicant: Vandersanden Steenfabrieken N.V., 3740 Bilzen (BE)
(72) Inventor: WAUTERS, Maarten, 3740 BILZEN (BE)
(74) Representative: Callewaert, Raf

(57) **Abstract**

Building paste (4,5,6,9,10) and method for building water-repellent masonry (7), in which water-permeable, porous building blocks (1,2,3) are stacked on top of and next to each other, in which a curing building paste (4,5,6,9,10) is applied between these building blocks (1,2,3) which adheres to said building blocks (1,2,3), and in which at least one free visible side (11,12) of the building blocks (1,2,3) is left free, wherein a water-repellent impregnating agent, able to migrate from the building paste (4,5,6,9,10) to the building blocks (1,2,3), is added in advance to the building paste (4,5,6,9,10) as an admixture in a quantity capable of making an outer shell (8) of the free visible side (11,12) of the building blocks (1,2,3) water-repellent.

## Description

The invention relates to a method of building a water-repellent masonry, in which water-permeable, porous building blocks are stacked on top of and next to each other with a curing building paste in between adhering to these building blocks, and with the building blocks having at least one free visible side. The paste is applied to the laying surfaces and, if necessary, to the heads of the building blocks. The free visible side of the building block, such as a brick, is formed of at least one free stretch and possibly also a free head of the building block.

The invention also relates to a binder paste for creating masonry according to this method and a masonry with this binder paste.

The water-permeable, porous building blocks absorb water when exposed to it. As a consequence, these water-permeable, porous building blocks will absorb water. In classic masonry with bricks, for example, free stretches and free heads of the bricks can absorb water so that water can penetrate into the masonry through them. Water may also penetrate into the bricks through joints between these bricks.

Making facade elements such as bricks and mortar joints water-repellent ensures that water penetration is prevented. This prevents damage caused by moisture penetration and/or freezing. Also soiling is prevented because dirt will adhere less well. In addition, this also counteracts the so-called efflorescence of salts, lime and gypsum from the brick and/or the mortar.

According to the present state of the art, various methods are used to make existing porous masonry water-repellent, water-resistant and/or water-impermeable. Depending on the application, the masonry remains vapour-permeable. Thus, for example, driving rain cannot penetrate whereas water vapour can still evaporate from the masonry. A well-known technique is to impregnate existing masonry with a hydrophobic impregnating agent. To this end, the impregnating agent is applied to the outer surface of the masonry or injected into the masonry via boreholes. Another well-known technique is to apply a water-repellent coating or even a watertight mortar layer to the outer surface, which does not preserve the structure and appearance of the masonry. In the after-treatment of existing masonry, the result is highly dependent on the skilled execution. When creating new classic masonry with porous building blocks and making them water-repellent, these additional operations must always be carried out as well.

In order to obtain new masonry with water-repellent properties, porous building blocks and facing bricks, such as classic bricks made of clay or concrete blocks are now being impregnated in advance by spraying them or at least partially immersing them in an impregnating agent. In addition to the disadvantage that an additional operation must always be performed in the manufacture of these building blocks, the water-repellent building blocks obtained may also be more difficult to incorporate in traditional masonry as binder paste adheres less well to these building blocks or is more sensitive to excessive moisture in the building paste or on the building block.

Impregnating agents are furthermore also used to add directly to curing building materials, such as concrete and mortar, to make these curing building materials water-repellent.

However, the outer surface of classic clay bricks must always be treated by applying a water-repellent impregnating agent or a water-repellent coating to them after the bricks have been manufactured.

Dutch patent NL1005277 describes a method for manufacturing masonry using water-repellent impregnated bricks and water-repellent binder paste, in which silicone resins, siliconates and/or alkylalkoxysiloxane are used.

Other patent documents such as US4,648,904, US5,051,129 and US5,250,106 also describe silane- and siloxane-based impregnating agents for the additional treatment of existing masonry as described above.

US2012/0096796 describes a cement mix containing siloxane and alkoxysilane for cement-bound materials, but does not allow bricks to be made water-repellent.

The invention aims to remedy these disadvantages by proposing a working method and a building paste that make it possible to obtain water-repellent new masonry in a simple manner using water-permeable, porous building blocks, without having to carry out substantial additional operations.

To this end, the invention proposes a method in which the building paste is manufactured and an additive containing a water-repellent impregnating agent is added, in which this building paste is applied between the porous building blocks and the impregnating agent from the building paste is allowed to penetrate into the porous building blocks while the building paste is allowed to cure and adhere to the building blocks, giving an outer shell of the free visible side of the building blocks a water-repellent character, as claimed in the appended claims.

Practically, a water-repellent impregnating agent, capable of migrating from the building paste to the building blocks, is added in advance to the building paste as an admixture, in a quantity that is necessary to make the outer shell of the free visible side of the building blocks water-repellent, preferably up to a certain minimum thickness.

Thus, the admixture is added in a quantity that exceeds the quantity required to give only the building paste its water-repellent character.

Preferably, the building paste is a binder paste that is applied between the building blocks during the construction of the masonry in order to connect these building blocks, and/or the building paste is a joint paste that is applied between the building blocks in order to point joints after the building blocks have been joined together with binder paste. In this way, the building blocks are placed on a layer of the building paste with the impregnating agent and/or joints between the building blocks are pointed with the building paste containing the impregnating agent.

In an advantageous manner, the admixture is added in a quantity that is necessary to give the outer shell of the free visible side of the building blocks said water-repellent character up to a certain minimum thickness. Thus, the minimum thickness of the outer shell should preferably be at least 1 mm, in particular at least 2 mm. In this way, the admixture and/or the quantity of admixture to be applied can possibly be selected in order to obtain a predetermined thickness of the water-repellent outer shell. The admixture and/or the quantity of admixture may thus be determined in order to make the outer shell water-repellent to a minimum thickness.

In a very advantageous manner, the impregnating agent makes the outer shell of the building blocks water-repellent by means of siliconisation.

In an extremely advantageous manner, the admixture contains the water-repellent impregnating agent with at least silane or siloxane or a combination thereof as an active ingredient.

According to an embodiment of the working method, silane is selected from the group of organoalkoxysilanes, in particular alkylalkoxysilanes.

Preferably the silane is selected from the group of organoalkoxysilanes having as functional groups:
- at least two alkoxy groups, which may be identical or different, and which preferably contain 1 to 4 C-atoms, and in particular 1 to 2 C-atoms; and
- at least one alkyl group containing 1 to 18 C-atoms, preferably 1 to 8 C-atoms.

According to an embodiment of the method, siloxane contains 2 to 15 silicon atoms, preferably 2 silicon atoms, and one or more alkyl groups, and preferably siloxane further contains one or more alkoxy groups.

According to an embodiment of the method, the alkyl group contains substituents containing oxygen, nitrogen, sulphur and/or functional groups containing halogen, and/or the alkyl group contains an aromatic substituent.

According to an embodiment of the method, silane and/or siloxane is selected with at least one reactive functional alkoxy group, preferably a methoxy group and/or an ethoxy group.

According to an embodiment of the method
- silane is selected from the group of organochlorosilanes or alkylalkoxysilanes with one or more alkyl groups;
- siloxane preferably contains 2 to 15 silicon atoms, siloxane is linear, branched or cyclic and contains siloxane chlorine, alkoxy and/or alkyl groups;
in which said alkyl groups contain 1 to 18 C-atoms and are linear or branched.

According to this embodiment of the method, said alkyl groups preferably contain unsaturated and/or aromatic substituents and/or said alkyl groups are preferably functionalised with oxygen, nitrogen, sulphur and/or functional groups containing halogen.

According to a possible embodiment of the method, the water-repellent impregnating agent of the admixture is selected from Triethoxy (2,4,4-trimethylpentyl)silane, Trimethoxy(propyl)silane, (3-Mercaptopropyl)trimethoxysilane, (3-Chloropropyl)-trimethoxysilane, 3-(Triethoxysilyl)propyl isocyanate, Isobutyl(trimethoxy)silane, Vinyltriethoxysilane, Trimethoxysilylbenzene, Triethoxy(octyl)silane, aminoethyl-aminopropyl-trimethoxysilane or 1,3-Dichloro-1,1,3,3-tetraisopropyldisiloxane or combinations thereof.

According to an embodiment of the method, the admixture is an aqueous solution of the water-repellent impregnating agent and/or the admixture contains an organic solvent.

In a special manner, the building paste is manufactured on the basis of cement, sand and water according to the method.

In a very special manner, the building block is a porous brick, which before this brick is incorporated in the masonry, shows a voluntary water absorption of 5% to 20%, in particular 5% to 15%, and/or an initial water suction of 0.5 kg/m²/min to 10.0 kg/m²/min, in particular 2.5 kg/m²/min to 7.5 kg/m2/min.

According to the method, also efflorescence and/or gypsum is advantageously avoided in masonry.

The invention also relates to a building paste for implementing the method and a building paste with building blocks in a water-repellent masonry, as also claimed in the appended claims.

To be applied in this method, the building paste contains an admixture with the water-repellent impregnating agent in a predetermined quantity that makes it possible to impregnate a free stretch and/or a free head of a water-permeable, porous building block in a brickwork via at least a laying surface and/or a head of this building block into a fully water-repellent shell that extends over the free stretch and/or the free head. The building paste is preferably a masonry mortar or a joint mortar, which contains cement, sand and water.

Other particularities and advantages of the invention will become clear from the following description of practical embodiments of the method and the building paste for masonry according to the invention; this description is given as an example only and does not limit the scope of the claimed protection in any way; the reference figures used below relate to the appended figures.
Figure 1 is a schematic representation of a test sample of a brickwork with bricks from a test set-up to evaluate the method according to the invention according to a standard test.
Figure 2 is a representation of bricks broken in two from a test sample according to Figure 1 from a test set-up with admixture added to building paste, in particular binder paste such as masonry mortar.
Figure 3 is a schematic representation of the cross section of the bricks in Figure 2.
Figure 4 is a representation of bricks broken in two of a test sample from a test set-up in which admixture is added to building paste, in particular joint paste such as joint mortar, according to a joint test.
Figure 5 is a schematic representation of the cross section of the bricks in Figure 4.

In the different figures, the same reference figures refer to identical or similar elements.

The invention generally relates to a method for creating masonry with water-repellent properties. The masonry is constructed by placing porous building blocks, such as bricks, on top of and next to each other. A free visible side consisting of at least a stretch and/or a head of the building block remains free. Between the building blocks, a spreadable building paste, such as cement-bound masonry mortar and/or joint mortar, is applied on the laying surfaces and against at least part of the heads of these building blocks. The building paste adheres to the building blocks during the curing process, thus forming a whole. The building paste may consist of a binder paste such as masonry mortar or also a joint paste such as joint mortar. Binder paste, such as masonry mortar, is building paste that is applied between the building blocks in order to connect these building blocks to each other. Joint paste, such as joint mortar, is building paste that is applied between the building blocks to point joints after the building blocks have been joined together with binder paste.

In order to make the porous building blocks water-repellent, a water-repellent impregnating agent is added to the building paste which, after the building paste has been applied on the building blocks, penetrates in these building blocks during the curing of the building paste.

The outer shell of the building block at the free stretches and the free heads is made water-repellent by this method, although only the laying surfaces and heads covered with building paste are in direct contact with the impregnating agent from this building paste.

Indeed, after the brick-laying, the porous building blocks, due to their capillary action, will extract liquid from the building paste via the laying surfaces and heads covered with this building paste. Components dissolved in the liquid, including active ingredients of the impregnating agent, are also extracted from the building paste and penetrate into the building block.

The evaporation of the liquid via the stretches and heads of the building blocks is a driving force for the extraction of liquid from the building paste.

As the brickwork dries, more liquid is drawn through the porous building blocks from the building paste via capillarity.

The liquid will further migrate via capillarity and/or adhesion forces to the free surfaces of the porous building blocks which are not covered with building paste, where it will evaporate from the brickwork. Active ingredients of the impregnating agent migrate through the building blocks up to these free surfaces.

Another established mechanism is the transport of active ingredients from the building paste by air to nearby building blocks, without there being any physical contact between the building paste and the building blocks.

The active ingredients bind at the free surfaces with the silicate matrix of the building block in the pores of the building blocks. The active ingredients from the impregnating agent react through condensation reactions in the pores with the inner silicate surface of these pores - also known as siliconisation -, thus forming a functional hydrophobic layer that remains in the pores, while the pores remain open for water vapour and any organic solvents. During the condensation reactions, volatile by-products are formed, such as for example ethanol and/or methanol, which evaporate from the building block so that the condensation reactions are irreversible. In this way, an outer shell is formed at these evaporative surfaces in which the pores contain water-repellent components and/or in which water-repellent components bind to the silicate matrix of the building blocks in the pores. This water-repellent outer shell blocks any further transport of substances from the building paste to the building blocks, and also protects the free surfaces of the building blocks against soiling.

Building paste for traditional masonry, such as cement-bound masonry mortar, is in itself known to those skilled in the art. The building paste and its composition, for example, based on cement as a binding agent, sand and water, is selected depending on the desired properties, such as, for example, compressive strength, processability, curing speed, thickness of the mortar layer and/or adhesion. Depending on the properties and application, the masonry mortar is also called thin-bed mortar or lightweight mortar. For traditional masonry, a mortar thickness of 10 to 12 mm is usually applied on the laying surfaces of the building blocks. In the case of thin joints or when gluing with thin joints, a much thinner layer with a thickness of, for example, 3 to 8 mm can be applied.

The building blocks may consist of, for example, bricks, ceramic fast hollow building blocks and/or concrete blocks, or other water-permeable, porous building blocks known to those skilled in the art. However, the invention is particularly interesting when creating façade brickwork with classic clay bricks, especially so-called hand-shaped bricks.

The impregnating agent according to the invention preferably contains, as an active ingredient, at least silane or siloxane or a combination thereof.

The silane is preferably selected from the group of organochlorosilanes or alkylalkoxysilanes, wherein the alkyl group contains 1-18 C atoms, is linear or branched, may contain unsaturated and/or aromatic substituents and/or may be functionalised by means of oxygen, nitrogen, sulphur and/or halogen containing functional groups. The siloxane contains, preferably, 2-8 silicon atoms and may be linear, branched or cyclic. The siloxane may, preferably, contain chlorine, alkoxy and alkyl groups as described above for silane.

The active ingredients are preferably at least partly in liquid form and preferably also contain at least partly volatile functional groups.

The active ingredients penetrate in the pores through capillary action. Liquids with a small contact angle in relation to the silicate surface (hydrophilic character of active ingredients and water) and a large air-liquid surface tension penetrate deep into the building blocks through capillary action. Furthermore, large cohesive forces between the liquid and the silicate surface increase the wetting of the pore surface and the migration rate of the water and the volatile components. On the other hand, volatile active ingredients can be transported by air and also react with the surface of the building blocks. An increased volatility of the active ingredients promotes this mechanism.

The water-repellent outer shell of the building block is preferably obtained by siliconisation of the inner surface of the pores of the porous building block. The active ingredients and/or water-repellent components of the active ingredients bind in the pores to the silicate matrix of the building block. Therefore, they preferably contain at least one hydrophobic functional group. In this way, the inner surface of the pores becomes water-repellent. This reduces the permeability of the block to water.

The use of impregnating agents with these active ingredients to make building blocks, bricks, mortar and/or masonry water-repellent has the advantage that pores are made water-repellent by siliconisation, but that this does not completely seal the pores. As the inner surface of these pores is water-repellent, liquid water will no longer be able to penetrate through capillarity, but the surface of the building block will remain vapour-permeable. As a result, no vapour-proof film is formed by these impregnating agents.

Different forms of silane and/or siloxane are already used in impregnating agents for masonry and are known to those skilled in the art, so that suitable active ingredients can be selected from them, depending on, for example, the intended water-repellent character. Depending on the application, for example, a certain water-repellent character may be desired. The choice of the quantity of active ingredients to be added also depends on the porosity and dimensions of the building block. Other factors such as ambient temperature, atmospheric humidity, humidity of the building blocks will also influence the impregnation process.

By means of a simple test set-up with test samples, as described below by way of example, an optimal composition and quantity of the impregnating agent can be evaluated. This can be done specifically for each application, circumstance and type of building block in order to obtain the desired water-repellent outer shell as optimally as possible.

Adding the impregnating agents with the active ingredients to the building paste has the advantage that a higher quantity can be added and that also the duration within which the impregnating agent can penetrate into the building block is longer compared to when the exposed free surface of the building block in the masonry is treated directly by spraying or spreading the impregnating agent.

The addition of binding retarders known as such slows down the curing of building paste, such as cement mortar paste, which also influences the effect of the impregnating agent on the building blocks.

The thickness of the obtained water-repellent outer shell depends on several factors. For example, at a higher concentration of impregnating agent in the building paste, this impregnating agent will penetrate into the building blocks more easily, and with a slower drying and curing process of the building paste, the impregnating agent will be able to penetrate in the building blocks for a longer period of time, as a result of which the impregnating agent with active ingredients will penetrate deeper and the resulting water-repellent outer shell will be thicker. The operating temperature will also influence the penetration and evaporation of impregnating agent, solvent and water.

In addition, the porosity of the building block also affects the penetration of the impregnating agent.

The porosity of a brick can, for example, be defined as the ratio between the pores and the mass of the brick, as well as its capacity to absorb water. The porosity is thus determined by the number, shape and nature of the inner surface of the pores. This determines the water absorption by the building block and also the water permeability of this building block.

This porosity can be characterised by properties known as such, such as, for example, voluntary water absorption, initial water suction and vapour permeability.

The voluntary water absorption of a brick is the amount of water that a dried brick can absorb after 24 hours of immersion in water. The quantity is specified in mass percent per 24 hours (m/md) or grams of water absorbed per 100 grams of dry brick per 24 hours.

The initial water suction of a brick is a measure for the amount of water that a dried brick absorbs within one minute after immersion of a (laying) surface in 5 mm deep water. The quantity is specified in kg per m2 per min.

The water vapour permeability is indicated by the vapour diffusion resistance number µ which indicates the resistance in relation to the resistance in air.

As the following experimental results show, for typical porous brick masonry with dimensions in the order of 215 mm x 100 mm x 66 mm and a joint thickness of approximately 12 mm, a water-repellent outer shell of the brick can be easily obtained with a minimum thickness of approximately 1 mm at the free stretch.

### Experimental results

With the help of a number of series of test set-ups of brickwork test samples, the formation of a water-repellent shell in a brick of the brickwork is checked in a standard test. Different admixtures and different amounts of these admixtures added to building paste are tested.

Unless otherwise stated, classical porous bricks with a size of 215 mm x 100 mm x 66 mm (hand-shaped facade brick Vandersanden Steenfabrieken) are used for the brickwork in the series of test set-ups. The dried bricks have a voluntary water absorption of less than 15% (m/md) and an initial water suction of less than 4.5 kg/m²/min. The vapour permeability µ for this stone is 5 to 10 (standard EN 1745).

In the test set-ups, classic masonry mortar is made as building paste on the basis of a pre-made dry masonry mortar that contains a mixture of sand and cement - a so-called premix (brand TIEMIX, masonry mortar class 5 (standard EN 998-2)). Unless otherwise stated, the admixture is added to the dry masonry mortar. In addition, 0.1 to 0.3 litres of water per kilogram of dry masonry mortar is added, depending on the amount of admixture added in order to obtain an easily workable building paste.

The admixture with impregnating agent in these test set-ups consists of an aqueous solution or dispersion containing alkoxysilane, siloxane and/or silicone as active ingredients. The admixture used in the test set-ups are (i) "Silres BS Creme N" (Wacker Chemie AG) with 25% by weight (g/100g) of alkoxysilane and siloxane as active ingredients, (ii) "Silres Powder D" (Wacker Chemie AG) with triethoxy(2,4,4-trimethylpentyl)silane and siloxane as active ingredients in a concentration of 30 to 35% by weight and (iii) "Silres BS 1801" (Wacker Chemie AG) with 99% by weight of triethoxy(2,4,4-trimethylpentyl)silane as active ingredient

These used admixtures contain organosilanes and/or siloxanes with a low molecular weight. They contain reactive alkoxy groups, such as methoxy or ethoxy groups. They also contain at least one hydrophobic functional group. With the removal of alcohol, permanent bonds are formed with the silicate matrix of the building block in the pores of the bricks.

Unless otherwise stated, the test set-ups are arranged and created at a temperature between 20 and 30°C.

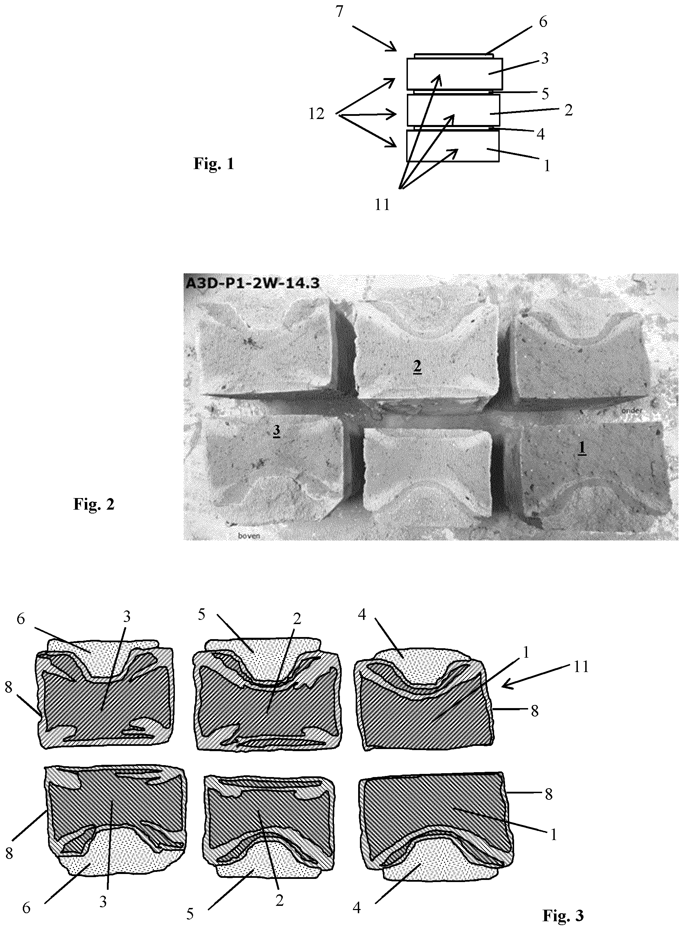

For the masonry 7 of the test set-ups, three dry bricks 1, 2 and 3 are each time laid on top of each other with a layer of masonry mortar 4 and 5, as shown in Figure 1. A joint of approximately 12 mm is provided between the bricks. A mortar layer 6 with a thickness of approximately 12 mm is also applied to the top brick. Unless otherwise stated, the joints are not pointed. In this way, the laying surfaces of the bricks are covered with mortar, while the heads 12 and the stretches 11 remain free.

After drying periods of 1, 2, 3, 4 and 6 weeks, the effect of the impregnating agent is evaluated. For this purpose, it is checked whether a water-repellent outer shell is obtained and the thickness of the water-repellent outer shell of the bricks is measured. The bricks of the test set-up are broken in two and immersed in water. The water penetrates in the porous parts of the brick, causing them to discolour or become dark, as shown, for example, in the illustrations in Figure 2 and the corresponding schematic drawings in Figure 3. Parts that are water-repellent do not absorb water, as a result of which that they remain light and the water-repellent shell becomes visible so that its thickness can be measured. In Figures 2 and 3, the water-repellent outer shell 8, which does not absorb water, is lighter than the other parts of the building block. The masonry mortar 4, 5 and 6 does not absorb water either, so that it remains lightly coloured as well. If necessary, a dye can be added to the water so that the water-repellent parts such as the outer shell 8 become even more visible.

In a wet test, wet bricks are used instead of the dry bricks in the standard test. To this end, the bricks are fully immersed in water prior to being incorporated in the brickwork.

A freeze test and a rain test examine the influence of climatic factors, in particular frost and rain.

The freeze test is a climate simulation of freezing temperatures in winter. 12 hours after the masonry has been laid according to the standard test described above, the masonry is subjected to a freezing temperature of -10 °C for two weeks. The normal temperature between 20 and 30 °C is then reset. From then on, after drying periods of 1, 2, 3, 4 and 6 weeks, the performance of the impregnating agent is evaluated, as in the standard test.

A rain test involves the daily sprinkling of the masonry for 4 days, after which the drying periods start as in the standard test.

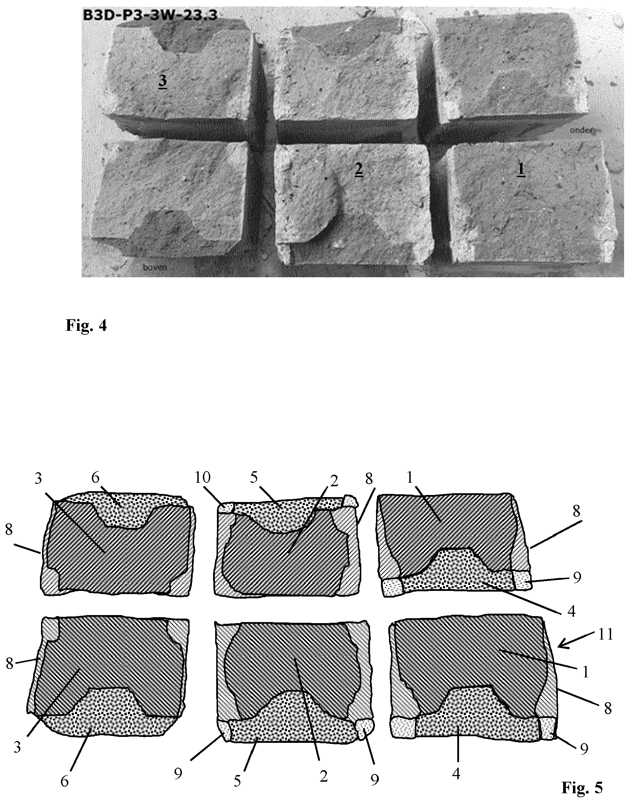

In a joint test, the joints of the masonry are pointed with joint mortar, and the admixture is only added to a dry joint mortar. The standard test is performed with masonry mortar without any addition of admixture to this masonry mortar. The joints of masonry 7 are pointed with the joint mortar 9 and 10 after the bricks 1, 2 and 3 have been laid on top of each other, after which the drying periods start as in the standard test and the presence of a water-repellent outer shell 8 is checked, as shown in the images of Figure 4 and the corresponding drawings of Figure 5.

In a porosity test, the standard test is performed on bricks with a lower porosity. Little porous and hard bricks are used for this purpose, with the dried bricks having a voluntary water absorption of less than 7% (m/md) and an initial water suction of 0.5 to 1.5 kg/m²/min. The vapour permeability µ for this brick is 50 to 100 (standard EN 1745).

As a control, test set-ups are made with masonry mortar and/or joint mortar wherein no admixture with impregnating agent is added to the building paste. The building blocks of these test set-ups show no water-repellent outer shell after 6 weeks.

In a first series of standard tests, "Silres BS Creme N" is used as admixture with alkoxysilane and siloxane as active ingredients. This admixture is added in quantities of 10 to 25 g per kg of dry masonry mortar. Table 1 shows some results for optimal quantities of 20 and 25 grams of admixture per kg of dry masonry mortar. A fully water-repellent outer shell is obtained after 4 weeks with the lower amount of 20 g/kg and after 1 week with the highest amount of 25 g/kg. With the lower amounts of admixture, a water-repellent outer shell is also obtained, after a longer period, but it is thinner; it is not shown in Table 1.

In the wet test with wetted bricks and "Silres BS Creme N" as admixture, with an optimal quantity of 20 g/kg, a fully water-repellent outer shell is obtained after 4 weeks having a thickness of 2 to 4 mm.

In the freeze test, 5 weeks after the bricklaying, i.e. after 3 weeks at a temperature of 20 to 30 °C, a fully water-repellent outer shell is obtained.

In the rain test, the fully water-repellent outer shell is obtained 4 weeks after the bricklaying.

In the test with a brick with lower porosity, a water-repellent shell is obtained after a period of more than 6 weeks.

In the joint test with 'Silres BS 1801' as admixture it is established that only the addition of admixture to the joint mortar will result in an effective water-repellent shell after 1 to 2 weeks. As can be deduced from Figures 4 and 5 by way of example, after wetting the broken bricks, a thin outer shell 8 that does not absorb any water will be lighter in colour than the inside of the brick that does absorb water. The thickness of this water-repellent outer shell 8 can be derived therefrom. The joint mortar of the joints 9 and 10 does not absorb any water either and is lighter in colour than the masonry mortar 4, 5 and 6 which does absorb water.

**Table 1: Selection of tests from a series of test set-ups with different tests and admixtures in which the time for forming a fully water-repellent stretch of a building block in a masonry and the thickness of the obtained water-repellent outer shell are examined.**

| **Test** | **Amount of admixture** | **Time** | **Thickness** |
|---|---|---|---|
| | **(g/kg)⁽¹⁾** | **(weeks)⁽²⁾** | **(mm)⁽³⁾** |
| **series with admixture "Silres BS Creme N" (Wacker Chemie AG) containing 25 % by weight (g/100g) of alkoxysilane and siloxane as active ingredients in quantities of 10 to 25 grams per kilogram of dry masonry mortar** | | | |
| Standard test | 20 | 4 | 2-6 |
| Standard test | 25 | 1 | 1-3 |
| Wet test | 20 | 4 | 2-4 |
| Freeze test | 15 | 3 | 2-3 |
| Freeze test | 20 | 3 | 2-5 |
| Rain test | 20 | 4 | 2-6 |
| Porosity test | 20 | >6 | 1-2 |
| **series with admixture "Silres BS 1801" (Wacker Chemie AG) with 99% (g/100g) by weight of triethoxy(2,4,4-trimethylpentyl)silane as an active ingredient in quantities of 1 to 2,5 grams per kilogram of dry masonry mortar** | | | |
| Standard test | 1,5 | 4 | 1-2 |
| Standard test | 2,5 | 2 | 1-3 |
| **series with admixture "Silres BS 1801" (Wacker Chemie AG) containing 99% by weight (g/100g) of triethoxy(2,4,4-trimethylpentyl)silane as an active ingredient in quantities of 4 to 10 grams per kilogram of dry joint paste** | | | |
| Joint test | 8 | 1 to 2 | 2-10 |
| Joint test | 10 | 1 to 2 | 2-10 |
| **series with admixture "Silres Powder D" (Wacker Chemie AG) containing 30 to 35 % by weight (g/100g) of alkoxysilane and siloxane as active ingredients in quantities of 1 to 8 grams per kilogram of dry masonry mortar** | | | |
| Standard test | 8 | 4 | 1-3 |

| | | | |
|---|---|---|---|
| ⁽¹⁾ grams of admixture per kilogram of dry building paste, masonry mortar or joint mortar, quantity in which an optimal result is obtained within the shortest possible time; ⁽²⁾ time to obtain a fully water-repellent skin, time in weeks; ⁽³⁾ minimum and maximum thickness of the obtained water-repellent shell in mm. | | | |

According to a method of invention, the impregnating agent of the admixture and/or the quantity of admixture or impregnating agent to be administered is preferably selected so as to obtain a water-repellent outer shell with a predetermined thickness. This is based on experimental results obtained, for example, from the test set-ups and tests described above. For example, with a quantity of 0.5 g to 10 g of water-repellent impregnating agent per kg of dry building paste, a water-repellent outer shell is obtained that is at least 1 mm.

In a separate series of tests, it is also tested whether any physical contact between the building paste and bricks is strictly necessary to obtain the water-repellent outer shell. For this purpose, building paste is manufactured with 2 kg of the dry premix of sand and cement to which 10 g of "Silres BS 1801" - triethoxy(2,4,4-trimethylpentyl)silane is added, as well as water after mixing. In an enclosed space, without any active ventilation or airflow, three building blocks are stacked loosely on top of each other with the building paste at a distance of 25 cm, without the latter making any contact with the building blocks. After 4 days, a water-repellent outer shell is observed in these blocks as well.

In all the tests of all the series with the three admixtures "Silres BS Creme N", "Silres Powder D" and "Silres BS 1801", a water-repellent layer is obtained, so that it can be decided that the active ingredients in these admixtures exhibit migrating properties.

The triethoxy (2,4,4-trimethylpentyl) silane of "Silres BS 1801" provides the quickest way to achieve a water-repellent outer shell in the building block. In general, the water-repellent outer shell is obtained faster by increasing the concentration of the admixture and/or the water-repellent impregnating agent. The use of wet building blocks instead of dry ones or the exposure of the masonry to rain has little influence on the speed at which the water-repellent outer shell is formed.

It is also interesting to note that simply adding the admixture to the joint mortar is sufficient to obtain a water-repellent outer shell. Using the admixture only in the joint mortar naturally is advantageous in that the bricklaying can be done with masonry mortar without any admixture being added.

If less porous and/or harder bricks are used, a longer time is required to obtain a fully water-repellent outer shell, or a higher quantity of admixture should be used.

In the different test set-ups, no noticeable difference was observed in the adhesion of the building pastes to the building blocks. A possible influence of the added admixtures in the respective quantities was not observed.

The tests and test set-ups described above make it possible to easily select an admixture and/or water-repellent impregnating agent suitable for the invention from, for example, water-repellent impregnating agents known to those skilled in the art, and also to determine the optimum quantity thereof which results in the desired water-repellent outer shell.

The invention is not limited in any way to the admixtures described above. In additional selection tests, the hydrophobising properties and the migratory character of possible admixtures are studied. In these selection tests, impregnating admixture is applied locally, directly to the building block, without preparing a building paste. Traditional porous bricks, such as those described above for the standard test, are also used for this purpose.

Comparative tests show that admixtures, which are applied to the masonry paste or joint mortar and have migratory properties in order to hydrophobise the building block, also migrate and hydrophobise the building block if they are applied to a small part of the building block. Consequently, a simpler selection test can be set up to investigate the migratory behaviour of other possible admixtures under controlled conditions by applying them locally to the building block. This test may therefore possibly also serve as an alternative to the above-mentioned tests in which test samples of brickwork are produced.

In the selection test, only the centre of the stretch of the brick is treated with 3 ml of admixture, over the entire length of the brick.

The treated building blocks are put in a forced, pure air stream of 0.5 to 1.0 m/sec at a temperature of 20 to 30 °C at a minimum distance of 1 m from each other. These measures prevent possible contamination of admixtures via the air between the bricks. A non-treated control building block is also placed at 10 cm from each treated brick for control purposes. These control building blocks do not exhibit water-repellent properties in any of the selection tests.

The water-repellent properties of the stretch to which the admixture is applied and of the adjoining top and bottom of the brick are evaluated for 6 weeks, at different times after 1 to 42 days.

Both the hydrophobising and the migratory properties of the admixture are evaluated and represented in Table 2. With regard to the hydrophobising property, it is examined whether the admixture lends the brick a water-repellent character. With regard to the migratory property, it is checked whether the admixture migrates into the brick and whether the water-repellent character extends over a surface of the brick that is larger than the surface that is in direct contact with the admixture that is applied to it.

Thus, it is found that the tested silanes and siloxanes have good hydrophobising and migratory properties. Quite quickly, the hydrophobic zone extends over the entire stretch and, in most cases, even beyond at least part of the top and bottom of the brick, adjacent to this stretch. These silanes and siloxanes have functional groups with branched and/or linear aliphatic chains, saturated and/or unsaturated chains and/or rings, and/or aromatic groups. Silanes and siloxanes with such functional groups containing heteroatoms such as Cl, S, N and O also have migratory and hydrophobising properties. The migratory properties decrease as the molecular weight increases.

**Table 2: Hydrophobising and migratory properties of some silanes and siloxanes that qualify as admixtures in the method of the invention.**

| **Admixture** | **Time (days)** | | | | |
|---|---|---|---|---|---|
| | **1** | **4** | **7** | **14** | **42** |
| Triethoxy(2,4,4-trimethylpentyl)silane | C | C | C | C | C |
| Trimethoxy(propyl)silane | C | C | C | C | C |
| (3-Mercaptopropyl)trimethoxysilane | C | C | C | C | C |
| (3-Chloropropyl)-trimethoxysilane | C | C | C | C | C |
| Isobutyl(trimethoxy)silane | C | C | C | C | C |
| Vinyltriethoxysilane | A | C | C | C | C |
| Triethoxy(octyl)silane | B | C | C | C | C |
| aminoethyl-aminopropyl-trimethoxysilane | B | B | B | C | C |
| 3-(Triethoxysilyl)propyl isocyanate | C | C | C | C | C |
| Trimethoxysilylbenzene | B | C | C | C | C |
| 1,3-Dichloro-1,1,3,3-tetraisopropyldisiloxane | - | - | B | C | C |
| "Silres Powder D" (alkoxysilane and siloxane) | B | B | B | B | B |
| "Silres crème N" (alkoxysilane and siloxane) | B | B | B | B | B |
| "Silres crème C" (alkoxysilane and siloxane) | B | B | B | B | B |

| | | | | | |
|---|---|---|---|---|---|
| (-) no hydrophobic zone; (A) the hydrophobic zone extends only over the treated zone of the stretch; (B) the hydrophobic zone extends over the entire stretch; (C) the hydrophobic zone extends over the entire stretch and at least part of the top and bottom, adjacent to the stretch. | | | | | |

The invention is not limited in any way to the method explicitly described above. For example, the admixture can be added to either the binder paste or the joint paste, or to both. For example, the admixture can also contain a combination of different water-repellent impregnating agents. Thus, the admixture can also be added to wet building paste, in particular wet, uncured masonry mortar and/or joint mortar. The masonry may thus be essentially vertical, but it may also extend horizontally. Thus, the method can also be applied to, for example, a pavement with clay clinkers pointed with joint paste. Thus, the method cannot only be used in classic brickwork, but also, for example, for gluing building blocks. Furthermore, additional solvents might be added to the building paste to promote the diffusion of the water-repellent impregnating agent from the building paste and/or in the building block.

## Claims

1. Method for building water-repellent masonry (7), wherein water-permeable, porous building blocks (1,2,3) are stacked on top of and next to each other, in which a curing building paste (4,5,6,9,10) is applied between these building blocks (1,2,3) which adheres to said building blocks (1,2,3), and wherein at least one free visible side (11,12) of the building blocks (1,2,3) is left free, **characterised in that** a water-repellent impregnating agent, able to migrate from the building paste (4,5,6,9,10) to the building blocks (1,2,3), is added in advance to the building paste (4,5,6,9,10) as an admixture in a quantity capable of making an outer shell (8) of the free visible side (11,12) of the building blocks (1,2,3) water-repellent.

2. Method according to claim 1, wherein the building blocks (1,2,3) are placed on a layer of the building paste (4,5,6) and/or in which joints between the building blocks (1,2,3) are pointed with the building paste (9,10).

3. Method according to claim 1 or 2, wherein the impregnating agent contains at least silane or siloxane or a combination thereof.

4. Method according to claim 3, wherein silane is selected from the group of organoalkoxysilanes, in particular alkylalkoxysilanes.

5. Method according to claim 4, wherein the silane is selected from the group of organoalkoxysilanes having as functional groups:
- at least two alkoxy groups, which may be identical or different, and which preferably contain 1 to 4 C-atoms and, in particular, 1 to 2 C-atoms; and
- at least one alkyl group containing 1 to 18 C-atoms, preferably 1 to 8 C-atoms.

6. Method according to any one of claims 3 to 5, wherein siloxane contains 2 to 15 silicon atoms, preferably 2 silicon atoms, and one or more alkyl groups, and, preferably, in which siloxane furthermore contains one or more alkoxy groups.

7. Method according to any one of claims 4 to 6, wherein the alkyl group contains substituents with oxygen, nitrogen, sulphur and/or functional groups containing halogen, and/or wherein the alkyl group contains an aromatic substituent.

8. Method according to any one of claims 3 to 7, wherein silane and/or siloxane with at least one reactive functional alkoxy group, preferably, a methoxy group and/or an ethoxy group, is selected.

9. Method according to claim 3, wherein
- silane is selected from the group of organochlorosilanes or alkylalkoxysilanes with one or more alkyl groups;
- siloxane preferably contains 2 to 15 silicon atoms, is linear, branched or cyclic and contains chlorine, alkoxy and/or alkyl groups;
wherein said alkyl groups contain 1 to 18 C-atoms and are linear or branched.

10. Method according to claim 9, wherein said alkyl groups contain unsaturated and/or aromatic substituents and/or wherein said alkyl groups are functionalised with oxygen, nitrogen, sulphur and/or functional groups containing halogen.

11. Method according to any one of claims 1 to 10, wherein the water-repellent impregnating agent of the admixture is selected from Triethoxy(2,4,4-trimethylpentyl)silane, Trimethoxy(propyl)silane, (3-Mercaptopropyl)trimethoxy silane, (3-Chloropropyl)-trimethoxysilane, 3-(Triethoxysilyl)propyl isocyanate, Isobutyl(trimethoxy)silane, Vinyltriethoxysilane, Trimethoxysilylbenzene, Triethoxy(octyl)silane, aminoethyl-aminopropyl-trimethoxysilane or 1,3-Dichloro-1,1,3,3-tetraisopropyldisiloxane or combinations thereof.

12. Method according to any one of claims 1 to 11, wherein the building block (1,2,3) is a porous brick, which before this brick is incorporated in the masonry (7), shows a voluntary water absorption of 5 % to 20 %, in particular 5 % to 15 %, and/or shows an initial water suction of 0.5 kg/m²/min to 10.0 kg/m²/min, in particular 2.5 kg/m²/min to 7.5 kg/m²/min.

13. Method according to any one of claims 1 to 12, wherein the impregnating agent makes the outer shell (8) of the building blocks (1,2,3) water-repellent by means of siliconisation.

14. Building paste (4,5,6,9,10) according to any one of claims 1 to 13, whereby the building paste (4,5,6,9,10) contains an admixture with a water-repellent impregnating agent, whereby the impregnating agent is able to migrate from the building paste (4,5,6,9,10) to adjoining, water-permeable, porous building blocks (1,2,3) via at least one laying surface and/or a head of these building blocks (1,2,3), whereby the building paste (4,5,6,9,10) contains the impregnating agent in a predetermined quantity that is capable of impregnating a complete outer shell (8) that extends over the free visible side (11,12) of the building blocks (1,2,3) in a masonry (7) and making it water-repellent.

15. Building paste (4,5,6,9,10) according to claim 14 with building blocks (1,2,3) in a water-repellent masonry (7) built according to any one of claims 1 to 13.
